# EUROPÄISCHE PATENTANMELDUNG

(11) **EP 3 450 777 A1**
(43) Veröffentlichungstag der Anmeldung: **06.03.2019**
(21) Anmeldenummer: 18187623.6
(22) Anmeldetag: 07.08.2018
(51) Int. Cl.: F16B 11/00, B60R 19/24

(54) **VERFAHREN ZUR VERBINDUNG MINDESTENS ZWEIER BAUTEILE**

(30) Priorität: 29.08.2017 DE 102017119831
(71) Anmelder: REHAU AG + Co, 95111 Rehau (DE)
(72) Erfinder: Schneider, Sebastian, 08523 Plauen (DE); Schubert, Michael, 08309 Eibenstock (DE)

(57) **Zusammenfassung**

Die Erfindung betrifft ein Verfahren zur Verbindung mindestens zweier Bauteile (1, 2), insbesondere mindestens zweier, vorzugsweise mittels Spritzgussverfahren hergestellter, Kfz-Bauteile aus Kunststoff, wobei die Verbindung zunächst durch eine Vorfixierung des ersten Bauteils (1) und des zweiten Bauteils (2) zueinander und daran anschließend mittels einer Endfixierung der Bauteile (1, 2) aneinander erfolgt. Erfindungsgemäß erfolgt die Endfixierung durch eine Verklebung der Bauteile (1, 2), wobei ein Klebeflächenelement (3) des ersten Bauteils (1, 2) beweglich an diesem angeordnet ist und dieses Klebeflächenelement (3) erst nach der Vorfixierung der Bauteile (1, 2) zueinander durch eine Bewegung zur stoffschlüssigen Anlage mit einer Gegenklebefläche (4) des zweiten Bauteils (2) gebracht wird und die Bauteile (1, 2) hierdurch zueinander endfixiert werden.

## Beschreibung

Die Erfindung betrifft ein Verfahren zur Verbindung mindestens zweier Bauteile, insbesondere mindestens zweier, vorzugsweise mittels Spritzgussverfahren hergestellter, Kfz-Bauteile aus Kunststoff,
- wobei die Verbindung zunächst durch eine Vorfixierung des ersten Bauteils und des zweiten Bauteils zueinander und daran anschließend mittels einer Endfixierung der Bauteile aneinander erfolgt.

Ein Verfahren mit den eingangs beschriebenen Merkmalen ist insbesondere beim Zusammenbau von lackierten Kfz-Außenanbauteilen aus Kunststoff bekannt, beispielsweise dem Zusammenbau von Kfz-Stoßfängern, -Kotflügeln oder Spoilern. Das Verfahren betrifft hier insbesondere die Verbindung eines Schließteils und/oder Grundträgers und/oder Versteifungsteils mit der lackierten Verkleidung des Kfz-Außenanbauteils.

Die Vorfixierung erfolgt beispielsweise über eine Verclipsung bzw. Verrastung, woran anschließend in der Regel eine Fixierung durch eine Verschweißung oder eine Verklebung der Bauteile erfolgt. Die im Stand der Technik hierzu bekannten Verfahren haben jedoch Nachteile. Bei einer Endfixierung durch eine Schweißverbindung besteht die Gefahr einer Abzeichnung an der Oberfläche des Sichtteiles, was insbesondere bei der Ausbildung dieses Sichtteils als Außenanbauteil ("Class A - Fläche") eines Kraftfahrzeuges (z.B. lackierte Verkleidung) nachteilig ist. Diese Oberflächen müssen höchsten Ansprüchen genügen. Um eine Abzeichnung an der Oberfläche zu vermeiden, müssen Wandstärken erhöht werden, wodurch höhere Materialkosten entstehen und auch die Zykluszeit des Spritzgussprozesses des Außenanbauteils negativ beeinflusst wird. Außerdem werden zusätzliche Anlagenmodule zur Umsetzung des Schweißprozesses benötigt, was wiederum kosten- und zeitaufwendig ist. Bei einer Endfixierung durch Verkleben besteht die Gefahr einer undefinierten Verklebung zwischen dem Schließteil bzw. Grundträger bzw. Versteifungsteil und der Verkleidung.

Vor diesem Hintergrund liegt der Erfindung die Aufgabe zugrunde, ein Verfahren mit den eingangs beschriebenen Merkmalen anzugeben, welches eine exakte Endfixierung der Bauteile zueinander auf kostengünstige Weise ermöglicht.

Erfindungsgemäß wird diese Aufgabe dadurch gelöst, dass die Endfixierung durch eine Verklebung der Bauteile erfolgt, dass ein Klebeflächenelement des ersten Bauteils beweglich an diesem angeordnet ist und dieses Klebeflächenelement erst nach der Vorfixierung der Bauteile zueinander durch eine Bewegung zur stoffschlüssigen Anlage mit einer Gegenklebefläche des zweiten Bauteils gebracht wird und die Bauteile hierdurch zueinander endfixiert werden. Beim erfindungsgemäßen Verfahren erfolgt eine definierte zeitliche Trennung zwischen der Vorfixierung und der daran anschließenden Verklebung, wobei während der Vorfixierung durch das Klebeflächenelement in Vormontageposition ein vorzeitiges Verkleben verhindert wird. Erst nach erfolgter Vorfixierung wird das Klebeflächenelement durch eine Bewegung gezielt mit der Gegenklebefläche zur Anlage gebracht. Hierdurch ist ein sehr exaktes Positionieren der beiden Bauteile zueinander und eine sehr zuverlässige, definierte Verklebung möglich. Eine Verschweißung, welche mit der vorbeschriebenen Problematik von Abzeichnungen einhergeht, ist erfindungsgemäß nicht erforderlich. Somit kann also das kostengünstige Klebverfahren genutzt werden, um eine sehr exakte, zuverlässige Verbindung der Bauteile zueinander zu realisieren.

Gemäß einer bevorzugten Ausführungsform der Erfindung ist das Klebeflächenelement an einem um eine Schwenkachse schwenkbeweglichen Schwenkelement des ersten Bauteils angeordnet. Zweckmäßigerweise ist das Schwenkelement mittels eines Filmscharniers an die Struktur des ersten Bauteils angeschlossen, insbesondere im Spritzgussverfahren einstückig angeformt. Die Herstellung des ersten Bauteils im Spritzgussverfahren erfolgt zweckmäßigerweise in der bereits genannten Vormontageposition, bei der sich das Klebeflächenelement noch in seiner Ausgangsposition befindet. In dieser Position kann die Herstellung des ersten Bauteils ohne zusätzliche Schiebeelemente realisiert werden, da die Vormontageposition entsprechend im Spritzguss-Werkzeug in Hauptentformungsrichtung realisiert wird.

Zweckmäßigerweise ist das Klebeflächenelement mit mindestens einem an dem Schwenkelement angeordneten Rastelement starr verbunden, welches bei der stoffschlüssigen Anlage des Klebeflächenelements verrastet und hierdurch das Klebeflächenelement in der Anlageposition fixiert. Zweckmäßigerweise ist das Rastelement an eine Stützrippe des Schwenkelementes, vorzugsweise einstückig, angeformt. Hierdurch ist eine besonders stabile Anordnung gewährleistet. Vorzugsweise gleitet das Rastelement während der Schwenkbewegung des Schwenkelementes durch eine Ausnehmung im ersten Bauteil hindurch und verrastet schließlich an der Rückseite der Ausnehmung zwecks Fixierung des Klebeflächenelements in der Anlageposition. Durch diese Verrastung ist gewährleistet, dass ein ggf. erforderlicher Aushärtprozess der Klebstoffmasse erfolgen kann, ohne dass während dieses Prozesses die Gefahr einer Verschiebung bzw. sogar Ablösung der Klebeverbindung besteht. Durch die Verrastung werden das Klebeflächenelement und die Gegenklebefläche dauerhaft definiert zueinander positioniert, so dass eine saubere, definierte Verklebung der beiden Bauteile sichergestellt ist. Im Rahmen der Erfindung liegt es, dass das Rastelement während der Schwenkbewegung des Schwenkelementes an einer an die Ausnehmung angeformten Gleitfläche entlang gleitet und diese Gleitfläche in der Anlageposition hintergreift. Dies gewährleistet eine besonders sichere Verrastung. Die Ausnehmung kann als vom ersten Bauteil vollständig umgebene, geschlossene Öffnung ausgebildet sein. Im Rahmen der Erfindung liegt es ferner, dass die Schwenkachse und das Klebeflächenelement durch ein Abstandselement voneinander beabstandet sind, wobei das Klebeflächenelement, vorzugsweise winkelförmig, an das Abstandselement angeformt ist.

Die Vorfixierung der Bauteile erfolgt zweckmäßigerweise mittels einer Verclipsung bzw. Verrastung. Zur daran anschließenden Verklebung kann ein, vorzugsweise zumindest teilweise geschäumtes, Klebeband oder eine strukturlose Klebstoffmasse verwendet werden. Als Klebstoffmaterial haben sich insbesondere thermoplastische Elastomere (TPE), insbesondere auf Olefinbasis (TPE-O), z.B. PP-EPDM bewährt. Vorzugsweise ist das zweite Bauteil als lackierte Stoßfänger-, Kotflügel- oder Spoilerverkleidung ausgebildet. Die Klebefläche des Klebeflächenelementes weist zweckmäßigerweise eine Größe von mindestens 1 cm², z. B. mindestens 2 cm², vorzugsweise mindestens 5 cm² auf.

Gegenstand der Erfindung ist ferner eine Bauteilgruppe mit mindestens zwei Bauteilen, insbesondere Kfz-Bauteilen aus, vorzugsweise spritzgegossenem, Kunststoff, wobei diese Bauteile gemäß einem erfindungsgemäßen Verfahren wie zuvor beschrieben miteinander verbunden sind. Andere Anwendungsbereiche, wie z.B. Montageverfahren im Möbelbau, im Bauwesen oder dergleichen werden hierdurch jedoch nicht ausgeschlossen.

Im Folgenden wird die Erfindung anhand einer lediglich ein Ausführungsbeispiel darstellenden Zeichnung ausführlich erläutert. Es zeigen schematisch:
- Fig. 1:: ausschnittsweise ein erfindungsgemäßes erstes Kunststoff-Bauteil in Vormontageposition V, in der dieses Bauteil in einem Spritzguss-Werkzeug hergestellt wurde, sowie in Verklebe-Anlageposition A,
- Fig. 2:: das erfindungsgemäße Verfahren zur Verbindung des in den Fig. 1 ausschnittsweise dargestellten Bauteils mit einem zweiten Bauteil und
- Fig. 3:: eine Draufsicht auf das in Fig.1, 2 dargestellte erste Kunststoff-Bauteil in Verklebe-Anlageposition A.

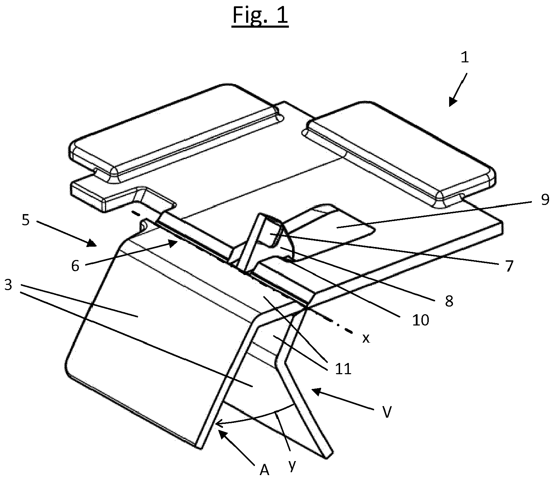

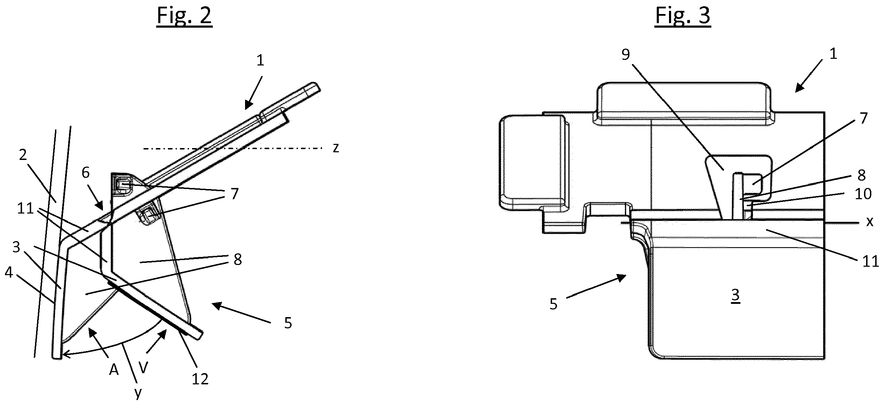

Die Fig. 2 zeigt ein Verfahren zur Verbindung zweier spritzgegossener Kfz-Bauteile 1, 2 aus Kunststoff. Das erste Bauteil 1 ist ausschnittsweise rechts dargestellt und im Ausführungsbeispiel als Grundträger eines Stoßfängers ausgebildet, während das zweite Bauteil 2 links (ebenfalls ausschnittsweise dargestellt) als lackierter Stoßfängerüberzug ausgebildet ist. Die Verbindung der beiden Bauteile 1, 2 erfolgt zunächst durch eine (nicht näher dargestellte) Vorfixierung des ersten Bauteils 1 und des zweiten Bauteils 2 zueinander, beispielsweise mittels einer Verrastung des ersten Bauteils 1 mit dem zweiten Bauteil 2, z.B. durch Verclipsung. Nach der Vorfixierung erfolgt eine Endfixierung der Bauteile 1, 2 zueinander durch ein Verkleben. Hierzu ist ein Klebeflächenelement 3 des ersten Bauteils 1 beweglich an diesem angeordnet. Dieses Klebeflächenelement 3 befindet sich während der Vorfixierung in einer Vormontageposition V (s.a. Fig. 1 Position V), wird erst nach erfolgter Vorfixierung der Bauteile 1, 2 zueinander durch eine Bewegung in Pfeilrichtung y zur stoffschlüssigen Anlage mit einer Gegenklebefläche 4 des zweiten Bauteils 2 gebracht und nimmt dann seine Anlageposition A ein (s.a. Fig. 1 Position A). Hierdurch werden die Bauteile 1, 2 zueinander endfixiert.

Wie in den Figuren 1 bis 3 ersichtlich, ist das Klebeflächenelement 3 an einem um eine Schwenkachse x schwenkbeweglichen Schwenkelement 5 des ersten Bauteils 1 angeordnet. Hierbei ist das Schwenkelement 1 mittels eines Filmscharniers 6 an die Struktur des ersten Bauteils 1 einstückig angeformt. Das Klebeflächenelement 3 ist starr mit einem an dem Schwenkelement 5 angeordneten Rastelement 7 verbunden, welches bei stoffschlüssiger Anlage des Klebeflächenelementes 3 verrastet und hierdurch das Klebeflächenelement 3 in der Anlageposition A (s. Fig. 1, 2) fixiert. Es ist erkennbar, dass das Rastelement 7 an eine Stützrippe 8 des Schwenkelementes 5 angeformt ist. Die Stützrippe 8 ist senkrecht zur Schwenkachse x ausgerichtet. Während der Schwenkbewegung des Schwenkelementes 5 gleitet das Rastelement 7 durch eine Ausnehmung 9 im ersten Bauteil 1 hindurch und verrastet schließlich an der Rückseite der Ausnehmung 9 zwecks Fixierung des Klebeflächenelementes 3 in der Anlageposition A gemäß Fig. 1 bzw. 2. Das Rastelement 7 gleitet hierbei während der Schwenkbewegung des Schwenkelementes 5 an einer an der Ausnehmung 9 angeformten Gleitfläche 10 entlang und hintergreift diese Gleitfläche 10 in der Anlageposition A, s. Fig. 2. Im Ausführungsbeispiel ist die Ausnehmung 9 als vom ersten Bauteil 1 vollständig umgebende, geschlossene Öffnung ausgebildet.

Die Figuren zeigen, dass die Schwenkachse x und das Klebeflächenelement 3 durch ein Abstandselement 11 voneinander beabstandet sind, wobei das Klebeflächenelement 3 an das Abstandselement 11 einstückig und winkelförmig angeformt ist. Zur Verklebung wird ein teilweise geschäumtes Klebeband 12 (s. Fig. 2, in Fig. 1 und 3 nicht dargestellt) verwendet, vorzugsweise aus PP-EPDM. Alternativ kann jedoch auch eine strukturlose Klebstoffmasse, vorzugsweise mit hoher Viskosität, verwendet werden. Die Klebefläche des Klebeflächenelementes 3 weist im Ausführungsbeispiel eine Größe von mindestens 5 cm² auf.

In Fig. 2 ist ferner die Hauptentformungsebene z des Spritzgusswerkzeugs zur Herstellung des ersten Bauteils 1 dargestellt. Das erste Bauteil 1 wird in der Vormontageposition V des Klebeflächenelementes 3 gemäß Fig. 1 im Spritzguss hergestellt, so dass kein Hinterschnitt vorliegt und entsprechend beim Spritzgusswerkzeug auf Schieber verzichtet werden kann.

## Patentansprüche

1. Verfahren zur Verbindung mindestens zweier Bauteile (1, 2), insbesondere mindestens zweier, vorzugsweise mittels Spritzgussverfahren hergestellter, Kfz-Bauteile aus Kunststoff,
- wobei die Verbindung zunächst durch eine Vorfixierung des ersten Bauteils (1) und des zweiten Bauteils (2) zueinander und daran anschließend mittels einer Endfixierung der Bauteile (1, 2) aneinander erfolgt,
**dadurch gekennzeichnet, dass** die Endfixierung durch eine Verklebung der Bauteile (1, 2) erfolgt, dass ein Klebeflächenelement (3) des ersten Bauteils (1, 2) beweglich an diesem angeordnet ist und dieses Klebeflächenelement (3) erst nach der Vorfixierung der Bauteile (1, 2) zueinander durch eine Bewegung zur stoffschlüssigen Anlage mit einer Gegenklebefläche (4) des zweiten Bauteils (2) gebracht wird und die Bauteile (1, 2) hierdurch zueinander endfixiert werden.

2. Verfahren nach Anspruch 1, **dadurch gekennzeichnet, dass** das Klebeflächenelement (3) an einem um eine Schwenkachse (x) schwenkbeweglichen Schwenkelement (5) des ersten Bauteils (1) angeordnet ist.

3. Verfahren nach Anspruch 2, **dadurch gekennzeichnet, dass** das Schwenkelement (5) mittels eines Filmscharniers (6) an die Struktur des ersten Bauteils (1) angeschlossen ist.

4. Verfahren nach einem der Ansprüche 2 oder 3, **dadurch gekennzeichnet, dass** das Klebeflächenelement (3) mit mindestens einem an dem Schwenkelement (5) angeordneten Rastelement (7) starr verbunden ist, welches bei der stoffschlüssigen Anlage des Klebeflächenelementes (3) verrastet und hierdurch das Klebeflächenelement (3) in der Anlageposition (A) fixiert.

5. Verfahren nach Anspruch 4, **dadurch gekennzeichnet, dass** das Rastelement (7) an eine Stützrippe (8) des Schwenkelementes (5) angeformt ist.

6. Verfahren nach Anspruch 4 oder 5, **dadurch gekennzeichnet, dass** das Rastelement (7) während der Schwenkbewegung des Schwenkelementes (5) durch eine Ausnehmung (9) im ersten Bauteil (1) hindurch gleitet und schließlich an der Rückseite der Ausnehmung (9) zwecks Fixierung des Klebeflächenelementes (3) in der Anlageposition (A) verrastet.

7. Verfahren nach Anspruch 6, **dadurch gekennzeichnet, dass** das Rastelement (7) während der Schwenkbewegung des Schwenkelementes (5) an einer an die Ausnehmung (9) angeformten Gleitfläche (10) entlang gleitet und diese Gleitfläche (10) in der Anlageposition (A) hintergreift.

8. Verfahren nach Anspruch 6 oder 7, **dadurch gekennzeichnet, dass** die Ausnehmung (9) als vom ersten Bauteil (1) vollständig umgebene, geschlossene Öffnung ausgebildet ist.

9. Verfahren nach einem der Ansprüche 2 bis 8, **dadurch gekennzeichnet, dass** die Schwenkachse (x) und das Klebeflächenelement (3) durch ein Abstandselement (11) voneinander beabstandet sind, wobei das Klebeflächenelement (3) an das Abstandselement (11), vorzugsweise winkelförmig, angeformt ist.

10. Verfahren nach einem der Ansprüche 1 bis 9, **dadurch gekennzeichnet, dass** die Vorfixierung der Bauteile (1, 2) mittels einer Verclipsung erfolgt.

11. Verfahren nach einem der Ansprüche 1 bis 10, **dadurch gekennzeichnet, dass** zur Verklebung ein, vorzugsweise geschäumtes, Klebeband (12) oder eine strukturlose Klebstoffmasse verwendet wird.

12. Verfahren nach einem der Ansprüche 1 bis 11, **dadurch gekennzeichnet, dass** das zweite Bauteil (2) als lackierte Stoßfänger-, Kotflügel- oder Spoilerverkleidung ausgebildet ist.

13. Bauteilgruppe mit mindestens zwei Bauteilen (1, 2), insbesondere Kfz-Bauteilen aus, vorzugsweise spritzgegossenem, Kunststoff, wobei diese Bauteile (1, 2) gemäß einem Verfahren nach einem der Ansprüche 1 bis 12 miteinander verbunden sind.
